# EUROPEAN PATENT SPECIFICATION

(11) **EP 2 479 845 B1**
(45) Date of publication and mention of the grant of the patent: **26.10.2016**
(21) Application number: 11007535.5
(22) Date of filing: 15.09.2011
(51) Int. Cl.: H01R 4/38, H01R 9/24, H01R 13/50, H01R 43/18, H01R 107/00, B29C 45/14

(54) **Terminal block and terminal block manufacturing method**
Anschlussleiste und Verfahren zur Herstellung einer Anschlussleiste
Bornier et procédé de fabrication de bornier

(30) Priority: 20.01.2011 JP 2011010033
(43) Date of publication of application: 25.07.2012
(73) Proprietor: Sumitomo Wiring Systems, Ltd., Yokkaichi-shi, Mie 510-8503 (JP)
(72) Inventor: Akuta, daisuke, Yokkaichi-city Mie 510-8503 (JP)
(74) Representative: Müller-Boré & Partner Patentanwälte PartG mbB

(56) References cited:
- WO-A1-03/102456
- JP-A- 2008 098 007

## Description

The present invention relates to a terminal block and a terminal block manufacturing method.

Conventionally, a terminal block disclosed in Japanese Unexamined Patent Publication No. H11-144783 is known as the one for electrically connecting conductors such as busbars extending from devices such as a motor and an inverter. This terminal block electrically connects the conductors by placing the conductors of the respective devices one above another on a terminal block main body including metal nuts inside by insert molding and fastening the conductors by tightening bolts and the nuts.

However, according to such a terminal block, heat produced from one device is transferred to the other device via the terminal block. Further, heat produced from the device is transferred to the nut from the conductor and remains inside the terminal block.

Thus, an attempt has been made to arrange a metal heat sink below the nuts via an insulation sheet and integrally form these by resin. According to such a terminal block, heat transferred from the conductor to the nut is transferred to the heat sink via the insulation sheet and radiated from the heat sink. Thus, transfer of heat produced from the device to the other device can be restricted. Such a technique is known from Japanese Unexamined Patent Publication No. 2008-98007.

However, according to the terminal block disclosed in Japanese Unexamined Patent Publication No. 2008-98007, there is no means for respectively positioning the heat sink and the insulation sheet, the insulation sheet and the nuts in integrally forming the respective members by resin. Although positioning pins for positioning the nuts during molding are provided in a mold, there is no means for positioning the nuts at predetermined positions with respect to the insulating sheet and the nuts cannot be mounted on the positioning pins. Further, if the insulation sheet is displaced relative to the heat sink and the nuts, there is a possibility of reducing an insulating property between the nuts and the heat sink in the terminal block after resin molding.

The present invention was completed in view of the above situation and an object thereof is to prevent displacements of respective members and, hence, ensure an insulating property between nut(s) and a heat sink.

This object is solved according to the invention by the features of the independent claims. Preferred embodiments of the invention are subject of the dependent claims.

According to one aspect of the invention, there is provided a terminal block in which conductors extending from devices are placed or placeable or are to be placed one over another and fastened by at least one bolt, comprising at least one nut on which the conductors are placed; at least one heat sink arranged below the lower surface of the nut opposite to the upper surface thereof on which the conductors are placed; at least one insulating plate vertically sandwiched while being held in close contact with the nut and the heat sink; a molded resin part by which the nut, the insulating plate and the heat sink are integrally formed; a first positioning means for positioning the nut and the insulating plate with respect to each other at the time of integral molding; and a second positioning means for positioning the insulating plate and the heat sink with respect to each other at the time of integral molding, wherein the insulating plate includes at least one nut accommodating portion capable of at least partly accommodating the nut; and the first positioning means is formed by at least partly accommodating the nut into the nut accommodating portion, wherein the nut accommodating portion includes a bottom plate vertically sandwiched while being held in close contact with the nut and the heat sink and at least one surrounding wall standing upward from the bottom plate to at least partly surround one or more side surfaces of the nut.

According to the thus constructed terminal block, the nut, the heat sink and the insulating plate can be positioned with respect to each other by the first and second positioning means in molding the molded resin part, thereby being able to prevent the molded resin part from being molded with the insulating plate displaced. This can cause the nut, the heat sink and the insulating plate to be held in close contact at correct positions and ensure an insulating property between the nut and the heat sink.

According to this construction, the nut and the insulating plate can be positioned with respect to each other by at least partly accommodating the nut into the nut accommodating portion.

The present invention is preferably embodied to have the following constructions.

One or more positioning ribs which extend in a vertical direction (stand upward) and can come into contact with the side surface(s) of the nut may be provided on the inner surface of the surrounding wall.

The nut accommodating portion may include a bottom plate vertically sandwiched while being held in close contact with the nut and the heat sink and a surrounding wall standing upward from the bottom plate to surround side surfaces of the nut; and a plurality of positioning ribs which extend in a vertical direction and can come into contact with the side surfaces of the nut may be provided on the inner surface of the surrounding wall.

Accordingly, the nut can be more accurately positioned by the positioning ribs. Further, since the nut can come into contact only with the plurality of positioning ribs, clearances can be formed between the nut and the surrounding wall. This enables molding resin to easily flow into the clearances between the nut and the surrounding wall of the insulating plate in integrally forming the nut and the insulating plate by the molding resin. This makes it possible to improve fixing strength of the molding resin to the nut and the insulating plate and fix the nut and the insulating plate without any chance of backlash.

The positioning ribs may be so formed as to reinforce the surrounding wall over the substantially entire height.

According to this construction, since the surrounding wall is reinforced over the substantially entire height by the positioning ribs, the surrounding wall can be prevented from being inclined toward the nut by a resin pressure in integrally forming the nut and the insulating plate by the molding resin. Further, since the surrounding wall can be prevented from being inclined toward the nut, the molding resin can flow into the clearances between the nut and the surrounding wall to fill up the clearances.

The inner peripheral shape of the surrounding wall may substantially conform to the outer peripheral shape of the nut.

The heat sink may include an accommodation recess into which a projection provided on the lower surface of the insulating plate is at least partly fittable; and the second positioning means may be formed by at least partly fitting the projection of the insulating plate into the accommodation recess of the heat sink.

According to this construction, the insulating plate and the heat sink can be positioned by fitting the projection of the insulating plate into the accommodation recess of the heat sink.

The projection of the insulating plate may be formed by forming the insulating plate with at least one bolt escaping recess which substantially is coaxial with a bolt tightening hole provided in the nut, recessed downward from an upper side and projecting downward from the insulating plate.

According to this construction, the insulating plate and the heat sink can be positioned with respect to each other by fitting the bolt escaping recess, which is formed so that a bolt screwed into the nut does not interfere with the insulating plate, into the accommodation recess of the heat sink. That is, the bolt escaping recess can double as the second positioning means. Further, since the bolt escaping recess is accommodated into the accommodation recess of the heat sink, a height between the insulating plate and the heat sink can be reduced as compared with the case where the bolt escaping recess is not accommodated in the heat sink.

A plurality of nuts may be at least partly accommodated in the nut accommodating portion; and a part of the surrounding wall arranged between two adjacent nuts serves as at least one partition wall for partitioning between the two adjacent nuts.

According to this construction, it is possible to ensure a long creepage distance between the respective nuts and an insulating property between the nuts.

The partition wall may be set to be located higher than the conductors placed on the nuts,
A height of the partition wall may be set to be more than about 1.5 times the height of outer surrounding walls standing upward from the bottom plate of the nut accommodating portion.

The insulating plate may include a plurality of nut accommodating portion capable of at least partly accommodating a plurality of nuts and one unitary bottom plate common to all the nut accommodating portions is provided, wherein both upper and lower surfaces of the bottom plate preferably are formed to be flat.

According to another aspect of the invention, there is provided a method for manufacturing a terminal block, in particular according to the above aspect of the invention or a preferred embodiment thereof, comprising at least one nut on which conductors extending from devices are to be placed, at least one heat sink arranged below the lower surface of the nut opposite to the upper surface thereof on which the conductors are to be placed, at least one insulating plate vertically sandwiched while being held in close contact with the nut and the heat sink, and a molded resin part by which the nut, the insulating plate and the heat sink are integrally formed, the method comprising the following steps: relatively positioning the nut and the insulating plate with respect to each other; relatively positioning the insulating plate and the heat sink with respect to each other; supporting the nut by a first mold which is moved upward for mold opening; supporting the heat sink by a second mold which is moved downward for mold opening with the nut being relatively positioned with respect to the insulating plate and the insulating plate being relatively positioned with respect to the heat sink; molding a molded resin part by which the nut, the insulating plate and the heat sink are integrally formed and vertically sandwiched; relatively positioning the insulating plate and the heat sink with respect to each other; providing the insulating plate with at least one nut accommodating portion capable of at least partly accommodating the nut; and at least partly accommodating the nut into the nut accommodating portion, wherein the nut accommodating portion includes a bottom plate vertically sandwiched while being held in close contact with the nut and the heat sink and at least one surrounding wall standing upward from the bottom plate to at least partly surround one or more side surfaces of the nut.

The present invention is preferably embodied as follows:
The insulating plate may include a bolt escaping recess which is coaxial with a bolt tightening hole provided in the nut and formed by recessing a bottom plate of a nut accommodating portion of the insulating plate, and the relatively positioning the insulating plate and the heat sink with respect to each other may include at least partly fitting the bolt escaping recess into an accommodation recess of the heat sink.

The present invention is also directed to a method for manufacturing a terminal block comprising a nut on which conductors extending from devices are placed, a heat sink arranged below the lower surface of the nut opposite to the upper surface thereof on which the conductors are placed, an insulating plate vertically sandwiched while being held in close contact with the nut and the heat sink, and a molded resin part by which the nut, the insulating plate and the heat sink are integrally formed, the method being characterized in that the insulating plate includes a nut accommodating portion for accommodating the nut and a bolt escaping recess which is coaxial with a bolt tightening hole provided in the nut and formed by recessing a bottom plate of the nut accommodating portion; the heat sink includes an accommodation recess into which the bolt escaping recess of the insulating plate is fittable; and the nut is supported by a first mold which is moved upward for mold opening and the heat sink is supported by a second mold which is moved downward for mold opening with the nut accommodated in the nut accommodating portion and the bolt escaping recess and the accommodation recess of the heat sink fitted to each other, whereby the nut, the insulating plate and the heat sink are vertically sandwiched to mold the molded resin part.

According to this manufacturing method, the molded resin part can be molded with the nut and the insulating plate, the insulating plate and the heat sink respectively positioned at correct positions. This enables manufacturing of the terminal block with an insulating property between the nut and the heat sink ensured.

Further, since the nut, the insulating plate and the heat sink can be integrally formed with the molded resin part while being vertically sandwiched by a mold, the nut and the insulating plate, the insulating plate and the heat sink can be held in contact with each other. This enables manufacturing of the terminal block with improved heat transfer performance from the nut to the heat sink.

According to the above, it is possible to prevent displacements of respective members and, hence, ensure an insulating property between nuts and a heat sink.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block according to an embodiment,
FIG. 2 is a plan view of the terminal block,
FIG. 3 is a rear view of the terminal block,
FIG. 4 is a bottom view of the terminal block,
FIG. 5 is a section along V-V of FIG. 2,
FIG. 6 is a section along VI-VI of FIG. 2,
FIG. 7 is a plan view of a nut,
FIG. 8 is a plan view of an insulating plate,
FIG. 9 is a rear view of the insulating plate,
FIG. 10 is a bottom view of the insulating plate,
FIG. 11 is a plan view of a heat sink,
FIG. 12 is a bottom view of the heat sink,
FIG. 13 is a side view showing a state before the nuts, the insulating plate and the heat sink are assembled,
FIG. 14 is a plan view showing a state after the nuts, the insulating plate and the heat sink are assembled,
FIG. 15 is a section along XV-XV of FIG. 14, and
FIG. 16 is a section showing a state where a terminal block is molded in first and second molds.

### <Embodiment>

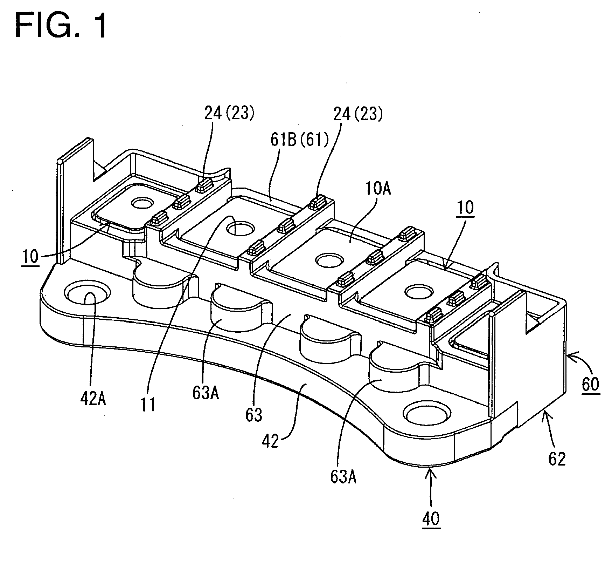

One particular embodiment of the present invention is described with reference to FIGS. 1 to 16.

In this embodiment is illustrated a terminal block which is to be mounted in a motor case to be installed in a vehicle such as an electric vehicle or a hybrid vehicle and is provided to electrically connect a busbar of a first electric equipment such as a electric motor (e.g. a three-pole busbar provided in a three-phase alternating current motor) and and a busbar of a second electric equipment such as an inverter (e.g. a three-pole busbar provided in an inverter).

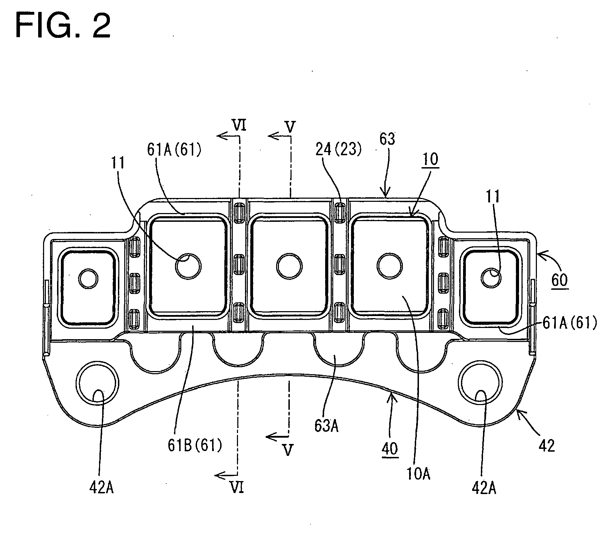

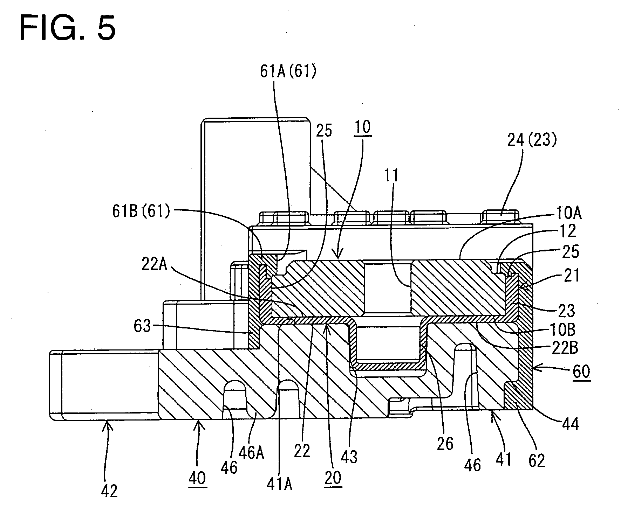

The terminal block includes one or more nuts 10 on which unillustrated busbars extending from electrical devices are to be placed, at least one heat sink 40 arranged adjacent to the nut(s) 10, particularly below the lower surfaces of the nuts 10 substantially opposite to the upper surfaces on which the busbars are to be placed, at least one insulating plate or element 20 vertically sandwiched between the nut(s) 10 and the heat sink 40 and at least one molded resin part 60 made e.g. of synthetic resin and at least partly covering these three members 10, 40 and 20. In the following description, a vertical direction is based on a vertical direction in FIG. 5 and a lateral direction is based on a lateral direction in FIG. 2.

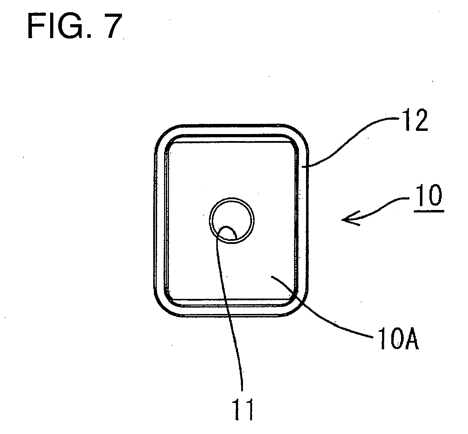

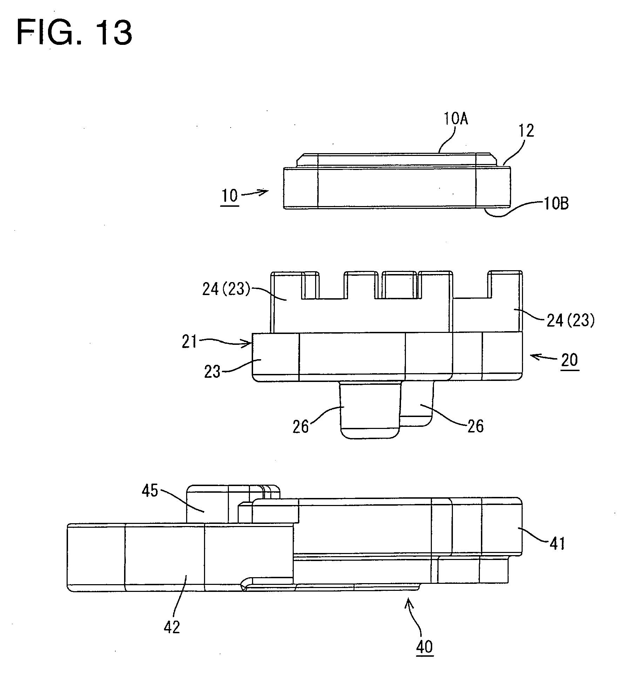

Each nut 10 particularly substantially is in the form of a metal block and, as shown in FIGS. 7 and 13, has a substantially rectangular or polygonal plan view with (e.g. four) rounded corners. A bolt tightening hole 11 penetrating in a vertical direction (direction at an angle different from 0° or 180°, preferably substantially perpendicular to both fastening surfaces 10A, 10B) is provided substantially in a central part of the nut 10. After a plurality of unillustrated busbars are to be placed on the upper fastening surface 10A of the nut 10, an unillustrated bolt is screwed to or into the bolt tightening hole 11 to electrically conductively connect the busbars.

A stepped or lowered portion 12 at least partly is formed on the outer peripheral edge of an upper end portion of the nut 10. This stepped or lowered portion 12 is formed to be slightly lower than the upper fastening surface 10A of the nut 10 as shown in FIG. 5. The stepped portion 12 particularly substantially is provided over the entire outer peripheral edge of the nut 10 and/or parallel to the upper and/or lower fastening surfaces 10A, 10B of the nut 10. Note that the upper and lower fastening surfaces 10A, 10B and the stepped portion 12 of the nut 10 particularly are flat without irregularity.

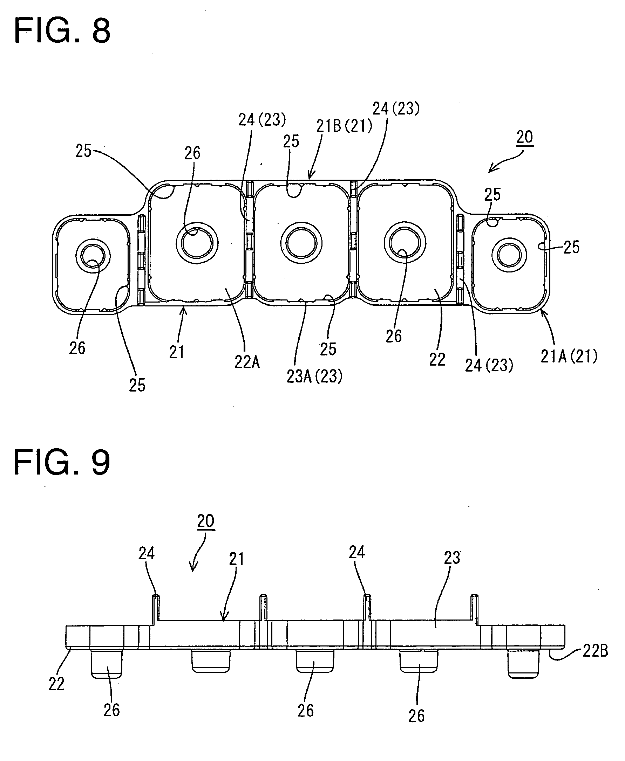

The insulating plate 20 is made of an insulating material such as synthetic resin and, as shown in FIG. 8, long in the lateral direction. This insulating plate 20 functions to transfer heat of the busbars placed on the nuts 10 from the nuts 10 to the heat sink 40 located below the nuts 10. Note that the synthetic resin used here particularly has a content of glass and talc of between about 50% and 75% (e.g. about 66 %) and warping is less likely to occur after molding and thermal conductivity is high as compared to synthetic resin having a content of glass and talc of about 33 %. This enables heat to be efficiently transferred from the nuts 10 to the heat sink 40.

The insulating plate 20 includes one or more, particularly a plurality of (e.g. five in this embodiment) nut accommodating portions 21 capable of at least partly accommodating the respective nuts 10 and particularly substantially arranged side by side in the lateral direction. Note that the nuts 10 and the nut accommodating portions 21 particularly are equivalent to a first positioning means.

As shown in FIG. 5, each nut accommodating portion 21 includes a bottom plate 22 with which the lower fastening surface 10B of the nut 10 can be substantially held or positioned in close contact, and a surrounding wall 23 standing upward or projecting from the bottom plate 22 to surround side surfaces of the nut 10 over at least part of the periphery, particularly over the substantially entire periphery. Accordingly, the nut accommodating portion 21 has an open upper end and this upper end opening has a rectangular or polygonal shape with (e.g. four) rounded corners. Further, as shown in FIG. 8, the respective nut accommodating portions 21 particularly are so formed substantially side by side that longer sides thereof are adjacent to each other. Out of the nut accommodating portions 21, those located at the opposite sides in the lateral direction particularly are smaller nut accommodating portions 21 A and/or one size smaller than larger nut accommodating portions 21 B located in a central or intermediate part.

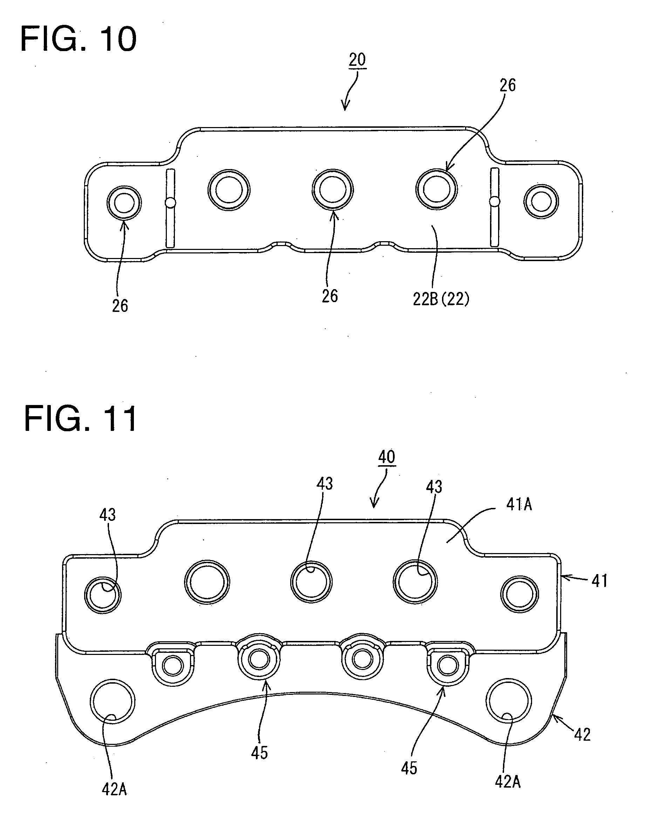

As shown in FIG. 10, particularly one unitary bottom plate 22 common to all the nut accommodating portions 21 is provided, and both upper and lower surfaces 22A, 22B of the bottom plate 22 are formed to be flat. This enables the upper surface 22A of the bottom plate 22 in the respective nut accommodating portions 21 and the lower fastening surfaces 10B of the nuts 10 to be closely held in contact without any clearances with the nuts 10 at least partly accommodated in the nut accommodating portions 21 as shown in FIG. 5. In this way, heat can be efficiently transferred from the nuts 10 to the bottom plate 22.

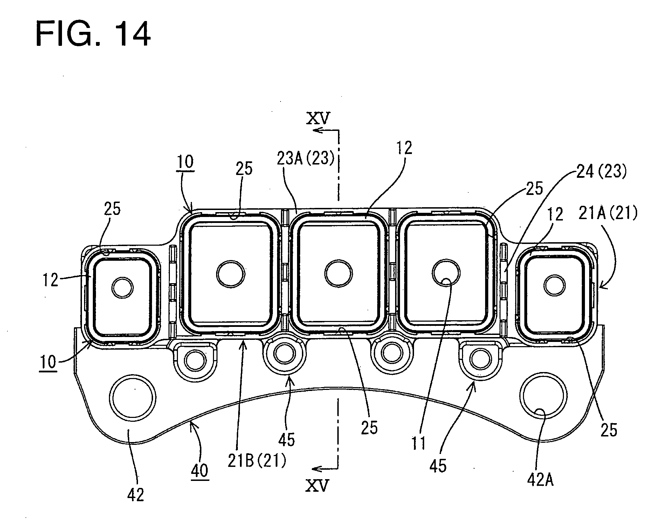

As shown in FIG. 8, the inner peripheral shapes of the surrounding walls 23 particularly have substantially rectangular or polygonal shapes and substantially conform to the outer peripheral shapes of the nuts 10. Further, the inner peripheral shapes of the surrounding walls 23 particularly are set to be slightly larger than the outer peripheral shapes of the nuts 10, and/or the nuts 10 particularly are to be at least partly accommodated with small clearances formed between the inner peripheral surfaces of the surrounding walls 23 and the side surfaces of the nut 10 in a state where the nuts 10 are accommodated in the nut accommodating portions 21 as shown in FIG. 14. In this way, the respective nuts 10 are at least partly accommodated in the respective nut accommodating portions 21 to be positioned.

Further, the surrounding wall 23 located between the adjacent nut accommodating portions 21 particularly is the one common to the both nut accommodating portions 21 and particularly serves as a partition wall 24 partitioning between the two nuts 10 accommodated in the both nut accommodating portions 21. Further, out of the surrounding wall, a part other than the partition wall 24 particularly serves as an outer surrounding wall 23A. As shown in FIG. 9, the height of the partition wall 24 particularly is set to be about twice the height of the outer surrounding walls 23A to ensure a creepage distance between the two adjacent nuts 10. Since the partition wall(s) 24 is/are set to be located higher than the busbars placed on the upper fastening surfaces 10A of the nuts 10, the busbars particularly are prevented from coming into contact with each other to be short-circuited due to lateral movements of the busbars placed on the nuts 10.

One or more positioning ribs 25 projecting inwardly of the nut accommodating portion 21 are provided on the inner peripheral surface of the surrounding wall 23. These positioning ribs 25 substantially extend upward straight from the bottom plate 22. The positioning ribs 25 of the outer surrounding wall 23A particularly are formed substantially over the entire height of the outer surrounding wall 23A. The positioning ribs 25 provided on the partition wall 24 particularly are set to extend up to a substantially vertical central of the partition wall 24. Further, the projecting ends of the positioning ribs 25 can come into contact with the side surfaces of the nut 10 accommodated in the nut accommodating portion 21.

As shown in FIG. 8, one or more (e.g. two) positioning ribs 25 particularly are provided at positions somewhat shifted toward a center position from the (particularly substantially opposite) horizontal side(s) of the (particularly each) surface located at one or more (e.g. four) sides of the surrounding wall 23. Further, another positioning rib 25 particularly is provided in the center or intermediate position of the inner peripheral surface at the (particularly each) shorter side of the surrounding wall 23 of the larger nut accommodating portion 21 B. That is, three positioning ribs 25 are formed on the inner peripheral surface at each shorter side of the surrounding wall 23 of each larger nut accommodating portion 21 B. In other words, each larger nut accommodating portion 21 B is formed with a plurality of (e.g. ten) positioning ribs 25. Further, each smaller nut accommodating portion 21A is formed with a plurality of (e.g. eight) positioning ribs 25. In this way, the nuts 10 are further horizontally accurately positioned by the eight or ten positioning ribs 25 as shown in FIG. 14 while being at least partly accommodated in the nut accommodating portions 21.

Further, a bolt escaping recess or hole 26 is formed in (particularly a substantially central part of) the bottom plate 22 at least partly enclosed by the surrounding wall 23. As shown in FIGS. 5 and 8, this bolt escaping recess 26 makes a circular opening in the upper surface 22A of the bottom plate 22 and projects downward. The inner surface shape of the bolt escaping recess 26 particularly is a bottomed recess extending downward or outward from the upper surface 22A of the bottom plate 22. The bottom plate 22 and the bolt escaping recesses 26 particularly are formed to have a substantially uniform thickness. Accordingly, as shown in FIGS. 9 and 10, each bolt escaping recess 26 particularly substantially has a cylindrical outer surface shape projecting downward or outward from the lower surface 22B of the bottom plate 22.

As shown in FIG. 5, this bolt escaping recess 26 substantially is arranged coaxially with the bolt tightening hole 11 of the nut 10 and the inner diameter thereof is slightly larger than that of the bolt tightening hole 11. This can prevent the nut 10 from interfering with the bottom plate 22 of the insulating plate 20 and/or prevent the insulating plate 20 from being broken by the bolt even when the bolt is screwed into the nut 10 and inserted through the bolt tightening hole 11.

The heat sink 40 particularly is produced of a material having a higher heat capacity than the remaining parts of the terminal block such as aluminum die-cast and particularly substantially shaped to be laterally long as shown in FIG. 11. The heat sink 40 includes a sink main body 41 on which the insulating plate 20 is to be placed, and a fixing portion 42 integrally or unitarily formed to the sink main body 41. The sink main body 41 particularly substantially is laterally long and the fixing portion 42 is formed to project from one longer side edge of the sink main body 41.

The insulating plate 20 is to be placed on an upper surface 41 A of the sink main body 41. Further, the upper surface 41A of the sink main body 41 is flat and/or polished to have no irregularities. This enables the lower surface 22B of the bottom plate 22 of the insulating plate 20 and the upper surface 41 A of the sink main body 41 to be held in close contact with the insulating plate 20 placed on the upper surface 41A of the sink main body 41 as shown in FIG. 5.

Further, the sink main body 41 is formed with one or more (e.g. five) accommodation recesses 43 particularly arranged substantially at equal intervals in the lateral direction. The accommodation recesses 43 make (particularly substantially circular) openings in the upper surface 41 A of the sink main body 41 and are bottomed recesses extending downward or outward from the upper surface 41A of the sink main body 41 as shown in FIG. 5. The accommodation recesses 43 are so formed that the bolt escaping recesses 26 of the insulating plate 20 at least partly are fittable or insertable thereinto. Further, the bolt escaping recesses 26 at least partly are fitted or inserted in the accommodation recesses 43 with small clearances formed between the outer surfaces of the bolt escaping recesses 26 and the inner peripheral surfaces of the accommodation recesses 43. This enables the insulating plate 20 and the heat sink 40 to be assembled while being positioned with respect to each other by fitting the respective bolt escaping recess(es) 26 of the insulating plate 20 into the corresponding accommodation recess(es) 43. Note that the bolt escaping recess(es) 26 and the accommodation recess(es) 43 particularly are equivalent to a second positioning means.

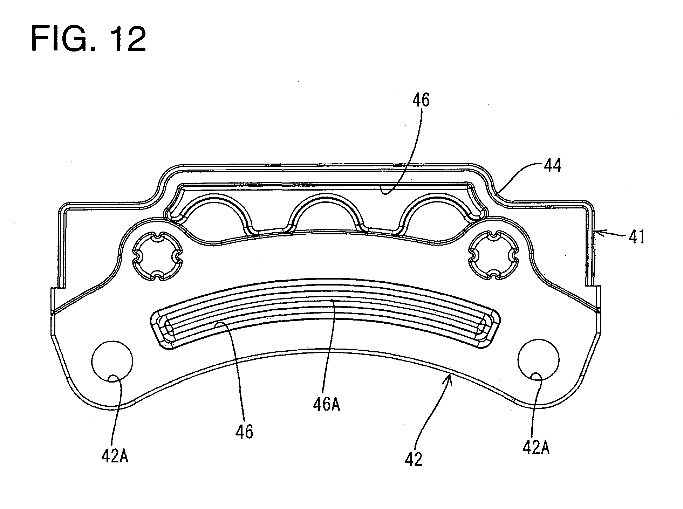

An outer edge stepped or lowered portion 44 formed somewhat above the lower surface of the sink main body 41 is formed at the outer peripheral edge of a lower end portion of the sink main body 41. As shown in FIG. 12, this outer edge stepped portion 44 is formed over at least part of the peripheral edge, particularly over the substantially entire outer peripheral edge except at a connected part of the sink main body 41 to the fixing portion 42.

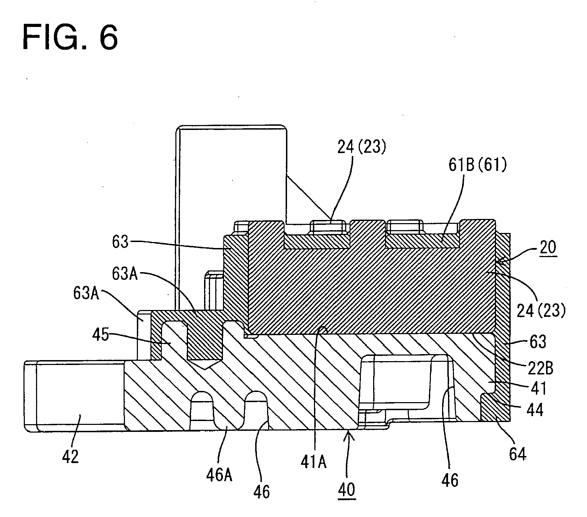

The fixing portion 42 is formed to be laterally long along the side surface of the sink main body 41. Further, one or more vertically penetrating bolt insertion holes 42A are provided particularly at the substantially opposite lateral sides of the fixing portion 42. One or more (particularly substantially cylindrical) projections 45 (particularly having a substantially cylindrical shape) are provided to vertically extend from the upper surface of the fixing portion 42. As shown in FIG. 6, the (cylindrical) projections 45 are connected to the side surface of the sink main body 41 facing the fixing portion 42, and/or extend up to a position slightly above the upper surface 41 A of the sink main body 41. Further, each (cylindrical) projection 45 particularly is or comprises a bottomed recess with an open upper side.

As shown in FIG. 12, one or more recesses 46 are formed in the lower surfaces of the sink main body 41 and/or the fixing portion 42. Out of these recesses, at least one heat radiation fin 46A is formed in the recess of the fixing portion 42, and cooling water or fluid is or may be so circulated as to come into contact with this fin 46A. In this way, a heat radiation property from the heat sink 40 is improved by increasing the surface area of the lower surface of the heat sink 40 by the recess 46 and/or cooling the heat sink 40 by the heat radiation fin 46A.

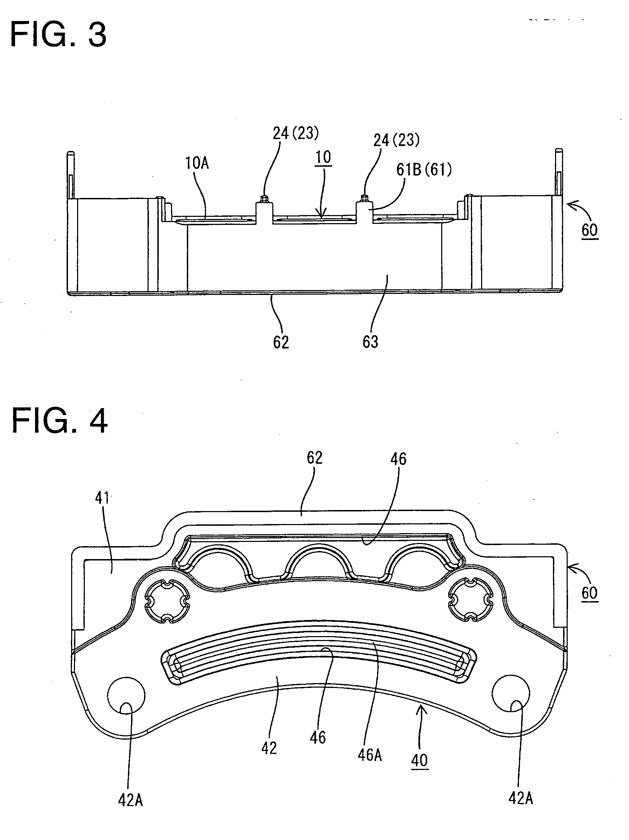

The molded resin part 60 is made e.g. of synthetic resin and, as shown in FIGS. 1 and 5, partly covers the nuts 10, the insulating plate 20 and the heat sink 40 with these assembled with each other. The molded resin part 60 includes an upper covering portion 61 to be held in close contact with the one or more stepped portions 12 of the one or more nuts 10 and/or the upper end portions of the surrounding walls 23 of the insulating plate 23, a lower fixing portion 62 to be held in close contact with the outer edge stepped portion 44 of the heat sink 40, and/or a side wall portion 63 to be held in close contact with the insulating plate 20 and the outer side surfaces of the sink main body 41 of the heat sink 40. Further, as shown in FIG. 3, the side wall portion 63 particularly is integrally or unitarily formed to the upper and lower covering portions 61, 62 so as to connect the upper and lower covering portions 61, 62.

As shown in FIG. 5, the upper covering portion 61 includes one or more nut covering portions 61 A at least partly covering the outer peripheral edges of the stepped portions 12 of the respective nuts 10 (particularly substantially over the entire peripheries) and/or one or more surrounding wall covering portions 61 B at least partly covering the upper end portions of the surrounding walls 23. Further, the surrounding wall covering portion 61 B is formed to at least partly cover the upper end portions of the respective surrounding walls 23 particularly except at parts of the partition walls 24. The respective nut covering portions 61 A and the respective surrounding wall covering portions 61 B are integrally or unitarily formed, and the upper covering portion 61 covers all the nuts 10 and surrounding walls 23. Note that the parts of the partition walls 24 particularly are exposed at the upper end surfaces of the surrounding wall covering portions 61 B.

As shown in FIGS. 4 and 5, the lower covering portion 62 is formed to at least partly cover the outer edge stepped portion 44 of the sink main body 41 of the heat sink 40 (particularly substantially over the entire range) from below. In this way, the molded resin part 60 is so formed as to vertically sandwich the nuts 10, the insulating plate 20 and the heat sink 40 and/or hold the respective members 10, 20 and 40 in close contact with each other as shown in FIGS. 5 and 6.

Further, the upper covering portion 61 particularly is so formed as to substantially fill up the clearances between the inner peripheral surfaces of the surrounding walls 23 of the nut accommodating portions 21 and the side surfaces of the nuts 10, thereby improving a degree of adhesion between the molded resin part 60, the nuts 10 and the insulating plate 20.

As shown in FIGS. 3 and 5, the side wall portion 63 particularly is formed to entirely cover the side surfaces of the insulating plate 20 and/or the side surfaces of the sink main body 41 of the heat sink 40 between the upper covering portion 61 and the lower covering portion 62. As shown in FIG. 6, the side wall portion 63 is provided with one or more projection covering portions 63A which at least partly cover the cylindrical projections 45 of the heat sink 40. The projection covering portions 63A particularly are formed to fill up the interiors of the cylindrical projections 45 and entirely cover the upper surfaces and side surfaces of the cylindrical projections 45, thereby improving a degree of adhesion between the molded resin part 60 and the heat sink 40.

The terminal block of this embodiment is structured as described above. Next, a terminal block manufacturing method is described.

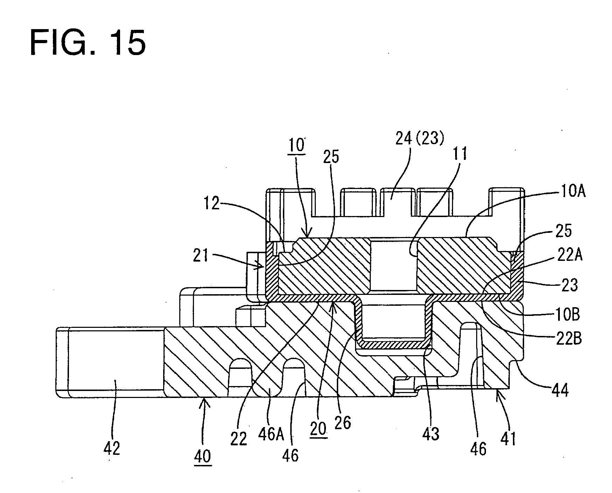

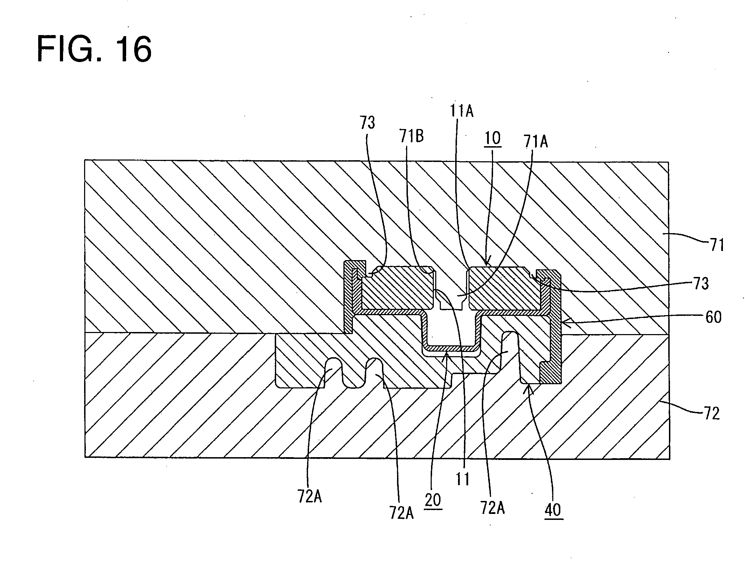

First, the one or more nuts 10 are at least partly accommodated in the respective one or more nut accommodating portions 21 of the insulating plate 20 and the one or more bolt escaping recesses 26 of the nut accommodating portions 21 at least partly are fitted into the respective one or more accommodation recesses 43 of the heat sink 40, whereby the nuts 10, the insulating plate 20 and the heat sink 40 are respectively assembled while being positioned as shown in FIGS. 14 and 15 and set in first and second molds 71, 72 (first and second molds 71, 72 particularly are equivalent to a mold) which are vertically moved for mold opening. At this time, since the nuts 10, the insulating plate 20 and the heat sink 40 are respectively positioned, they can be set in the first and second molds 71, 72 without being displaced. Note that the heat sink 40 particularly is positioned in the second mold 72 by at least partly inserting a positioning projection 72A of the second mold 72 into the recess 46 of the heat sink 40 as shown in FIG. 16.

Further, since the insulating plate 20 particularly is positioned on the heat sink 40 and the nuts 10 are positioned on the insulating plate 20, it can be prevented that positioning pins 71 A are largely displaced from the bolt tightening holes 11 to break the nuts 10 and/or the positioning pins 71 A when the positioning pin(s) 71 A of the first mold 71 are at least partly inserted into the bolt tightening hole(s) 11 of the nut(s) 10 from above. Note that the one or more nuts 10 are to be at least partly accommodated in a slightly loose state in the nut accommodating portions 21 before being fixed by the positioning pins 71 A. When the first and second molds 71, 72 are closed, slight relative displacements of the positioning pins 71 A and the bolt tightening holes 11 of the nuts 10 are or can be corrected so that the nuts 10 are fixed to the positioning pins 71 A by locating taper surfaces 11 A provided at the upper inner peripheral edges of the bolt tightening holes 11 of the nuts 10 at inclined surfaces 71 B provide at the positioning pins 71 A as shown in FIG. 16.

Further, the stepped portions 12 of the nuts 10 are pressed over the entire peripheries from above by resin biting or engaging portions 73 provided in the first mold 71 and the lower surface of the heat sink 40 is supported by the second mold 72, whereby the bottom plate 22 in the nut accommodating portions 21 of the insulating plate 20 at least partly can be (vertically) sandwiched between the lower fastening surfaces 10B of the nuts 10 and the upper surface 41 A of the sink main body 41 of the heat sink 40 to hold the one or more nuts 10, the heat sink 40 and the bottom plate 22 in close contact.

Subsequently, in the above state, synthetic resin is injected into a cavity formed by the first and second molds 71, 72 to form the molded resin part 60 as shown in FIG. 16. At this time, since the side surfaces of the nuts 10 can be held in contact only with the one or more positioning ribs 25 on the inner peripheral surface(s) of the surrounding wall(s) 23 of the insulating plate 20, clearances are formed between the inner surface(s) of the surrounding wall(s) 23 and the side surface(s) of the nut(s) 10 and the synthetic resin can flow into these clearances. This can cause the nut(s) 10, the insulating plate 20 and the molded resin part 60 to be held in close contact, and can fix the nut(s) 10 and the insulating plate 20 without any chance of backlash.

Finally, the first and second molds 71, 72 are vertically opened to complete the terminal block of this embodiment.

As described above, the terminal block according to this embodiment can be integrally or unitarily formed by the molded resin part 60 with the nut(s) 10 and the insulating plate 20, the insulating plate 20 and the heat sink 40 respectively positioned at correct positions. Thus, an insulating property between the nuts 10 and the heat sink 40 can be reliably ensured.

Since molding particularly is performed with the nuts 10, the insulating plate 20 and the heat sink 40 held in close contact, the nuts 10, the insulating plate 20 and the heat sink 40 can be held in close contact with each other after molding. That is, the terminal block substantially can be formed without forming any air layers at boundaries between the nuts 10 and the insulating plate 20 and at a boundary between the insulating plate 20 and the heat sink 40. This enables heat to be quickly transferred from the nuts 10 to the heat sink 40 and enables heat radiation performance of the terminal block to be improved even when the nuts 10 receive heat from the busbars.

Since the nut(s) 10, the insulating plate 20 and the heat sink 40 are (vertically) sandwiched while being substantially held in close contact by the molded resin part 60 as described above, heat transfer performance from the nuts 10 to the heat sink 40 can be improved with the insulating property ensured between the nuts 10 and the heat sink 40.

Accordingly, to prevent displacements of respective members and, hence, ensure an insulating property between nuts and a heat sink, a terminal block in which one or more conductors extending from respective devices are placed one over another and fastened by a bolt is provided with one or more nuts 10 on which the conductors are to be placed, a heat sink 40 to be arranged below the nuts, an insulating plate 20 vertically sandwiched while being held in close contact with the nut(s) 10 and the heat sink 40, and a molded resin part 60 which covers these three members 10, 20 and 40. The insulating plate 20 includes one or more nut accommodating portions 21 capable of at least partly accommodating the one or more respective nuts 10 and one or more bolt escaping recesses 26 projecting downward from a bottom plate 22 of the insulating plate 20. The heat sink 40 includes one or more accommodation recesses 43 into which the respective bolt escaping recess(es) 26 at least partly are fittable or insertable. The molded resin part 60 is molded with the one o rmore nuts 10 at least partly accommodated in the one or more respective nut accommodating portions 21 and the one or more respective accommodation recesses 43 and the one or more respective bolt escaping recesses 26 at least partly fitted to each other.

### <Other Embodiments>

The present invention is not limited to the above described and illustrated embodiment. For example, the following embodiments are also included in the technical scope of the present invention.
(1) Although the side surfaces of each nut 10 are covered over the entire periphery by the surrounding wall 23 of the nut accommodating portion 21 in this embodiment, the present invention is not limited to such a mode. For example, the surrounding wall may be composed of a plurality of walls intermittently arranged around the nut.
(2) Although the second positioning means is formed by fitting the bolt escaping recesses 26 of the insulating plate 20 into the accommodation recesses 43 of the heat sink 40 in this embodiment, the present invention is not limited to such a mode. For example, the second positioning means may be formed by providing a projection on the bottom plate 22 of the insulating plate 20 and fitting this projection into a recess provided in the heat sink 40.
(3) Although the first positioning means is formed by accommodating the nuts 10 into the nut accommodating portions 21 of the insulating plate 20 in this embodiment, the present invention is not limited to such a mode. For example, the first positioning means may be formed by providing the bottom plate 22 of the insulating plate 20 with projections which can come into contact with the four side surfaces of the nuts 10 and bringing the side surfaces of the nuts 10 into contact with the projections.
(4) Although the nuts 10 are more accurately positioned with respect to the nut accommodating portions 21 by providing the positioning ribs 25 on the inner peripheral surfaces of the surrounding walls 23 in this embodiment, the present invention is not limited to such a mode. For example, the nuts 10 may be more accurately positioned with respect to the nut accommodating portions 21 by narrowing clearances between the inner peripheral surfaces of the surrounding walls 23 and the side surfaces of the nuts 10.

### LIST OF REFERENCE NUMERALS

- 10:: nut (first positioning means)
- 11:: bolt tightening hole
- 20:: insulating plate
- 21:: nut accommodating portion (first positioning means)
- 22:: bottom plate
- 23:: surrounding wall
- 24:: partition wall
- 25:: positioning rib
- 26:: bolt escaping recess (projection, second positioning means)
- 40:: heat sink
- 43:: accommodation recess (second positioning means)
- 60:: molded resin part
- 71:: first mold (mold)
- 72:: second mold (mold)

## Claims

1. A terminal block in which conductors extending from devices are to be placed one over another and fastened by a bolt, comprising:
at least one nut (10) on which the conductors are to be placed;
at least one heat sink (40) arranged below the lower surface of the nut (10) opposite to the upper surface thereof on which the conductors are placed;
at least one insulating plate (20) vertically sandwiched while being held in close contact with the nut (10) and the heat sink (40);
a molded resin part (60) by which the nut (10), the insulating plate (20) and the heat sink (40) are integrally formed; and
at least one first positioning means for positioning the nut (10) and the insulating plate (20) with respect to each other at the time of integral molding;
wherein there is further provided at least one second positioning means (26; 43) for positioning the insulating plate (20) and the heat sink (40) with respect to each other at the time of integral molding;
**characterized in that**
the insulating plate (20) includes at least one nut accommodating portion (21) capable of at least partly accommodating the nut (10); and
the first positioning means is formed by at least partly accommodating the nut (10) into the nut accommodating portion (21),
wherein the nut accommodating portion (21) includes a bottom plate (22) vertically sandwiched while being held in close contact with the nut (10) and the heat sink (40) and at least one surrounding wall (23) standing upward from the bottom plate (22) to at least partly surround one or more side surfaces of the nut (10).

2. A terminal block according to claim 1, wherein one or more positioning ribs (25) which extend in a vertical direction and can come into contact with the side surface(s) of the nut (10) are provided on the inner surface of the surrounding wall (23).

3. A terminal block according to claim 2, wherein the one or more positioning ribs (25) are so formed as to reinforce the surrounding wall (23) over the substantially entire height.

4. A terminal block according to any one of the preceding claims, wherein the inner peripheral shape of the surrounding wall (23) substantially conforms to the outer peripheral shape of the nut (10).

5. A terminal block according to any one of the preceding claims, wherein:
the heat sink (40) includes an accommodation recess (43) into which a projection (26) provided on the lower surface of the insulating plate (20) is at least partly fittable; and
the second positioning means (26; 43) is formed by at least partly fitting the projection (26) of the insulating plate (20) into the accommodation recess (43) of the heat sink (40).

6. A terminal block according to claim 5, wherein the projection (26) of the insulating plate (20) is formed by forming the insulating plate (20) with at least one bolt escaping recess (26) which substantially is coaxial with a bolt tightening hole (11) provided in the nut (10), recessed downward from an upper side and projecting downward from the insulating plate (20).

7. A terminal block according to any one of the preceding claims, wherein:
a plurality of nuts (10) can be at least partly accommodated in a nut accommodating portion (21); and
at least one partition wall (24) is provided between the nuts (10) so that the nuts (10) can be individually accommodated.

8. A terminal block according to claim 7, wherein the partition wall (24) is set to be located higher than the conductors placed on the nuts (10).

9. A terminal block according to claim 7 or 8, wherein a height of the partition wall (24) is set to be more than about 1.5 times the height of outer surrounding walls (23A) standing upward from the bottom plate (22) of the nut accommodating portion (21).

10. A terminal block according to any one of the preceding claims, wherein the insulating plate (20) includes a plurality of nut accommodating portion (21) capable of at least partly accommodating a plurality of nuts (10) and one unitary bottom plate (22) common to all the nut accommodating portions (21) is provided, wherein both upper and lower surfaces (22A, 22B) of the bottom plate (22) preferably are formed to be flat.

11. A method for manufacturing a terminal block comprising at least one nut (10) on which conductors extending from devices are to be placed, at least one heat sink (40) arranged below the lower surface of the nut (10) opposite to the upper surface thereof on which the conductors are to be placed, at least one insulating plate (20) vertically sandwiched while being held in close contact with the nut (20) and the heat sink (40), and a molded resin part (60) by which the nut (10), the insulating plate (20) and the heat sink (40) are integrally formed, the method comprising the following steps:
relatively positioning the nut (10) and the insulating plate (20) with respect to each other;
supporting the nut (10) by a first mold (71) which is moved upward for mold opening;
supporting the heat sink (40) by a second mold (72) which is moved downward for mold opening with the nut (10) being relatively positioned with respect to the insulating plate (20) and the insulating plate (20) being relatively positioned with respect to the heat sink (40); and
molding a molded resin part (60) by which the nut (10), the insulating plate (20) and the heat sink (40) are integrally formed and vertically sandwiched **characterized by**
relatively positioning the insulating plate (20) and the heat sink (40) with respect to each other;
providing the insulating plate (20) with at least one nut accommodating portion (21) capable of at least partly accommodating the nut (10); and
at least partly accommodating the nut (10) into the nut accommodating portion (21),
wherein the nut accommodating portion (21) includes a bottom plate (22) vertically sandwiched while being held in close contact with the nut (10) and the heat sink (40) and at least one surrounding wall (23) standing upward from the bottom plate (22) to at least partly surround one or more side surfaces of the nut (10).

12. A method according to claim 11, wherein the insulating plate (20) includes a bolt escaping recess (26) which is coaxial with a bolt tightening hole (11) provided in the nut (20) and formed by recessing a bottom plate (22) of a nut accommodating portion (21) of the insulating plate (20), and
wherein the relatively positioning the insulating plate (20) and the heat sink (40) with respect to each other includes at least partly fitting the bolt escaping recess (26) into an accommodation recess (43) of the heat sink (40).

## Patentansprüche

1. Eine Anschlussleiste, bei der von Vorrichtungen ausgehende Leiter übereinander zu platzieren und durch einen Bolzen festzulegen sind, die Folgendes umfasst:
mindestens eine Mutter (10), auf der die Leiter zu platzieren sind;
mindestens eine Wärmesenke (40), die unterhalb der unteren Fläche der Mutter (10) angeordnet wird, die der oberen Fläche davon, auf der die Leiter angeordnet werden, gegenüberliegt;
mindestens eine isolierende Platte (20), die vertikal sandwichartig angeordnet wird, während sie in engem Kontakt mit der Mutter (10) und der Wärmesenke (40) gehalten wird;
ein Harzformteil (60), durch das die Mutter (10), die isolierende Platte (20) und die Wärmesenke (40) in einstückiger Weise ausgebildet sind; und
mindestens ein erstes Positionierungsmittel, um die Mutter (10) und die isolierende Platte (20) zum Zeitpunkt des einstückigen Formens in Bezug aufeinander zu positionieren;
wobei des Weiteren mindestens ein zweites Positionierungsmittel (26; 43) bereitgestellt wird, um die isolierende Platte (20) und die Wärmesenke (40) zum Zeitpunkt des einstückigen Formens in Bezug aufeinander zu positionieren;
**dadurch gekennzeichnet, dass**
die isolierende Platte (20) mindestens einen Mutter-Aufnahmeabschnitt (21) enthält, der in der Lage ist, die Mutter (10) zumindest partiell aufzunehmen; und dass
das erste Positionierungsmittel durch die zumindest partielle Aufnahme der Mutter (10) im Mutter-Aufnahmeabschnitt (21) gebildet ist,
wobei der Mutter-Aufnahmeabschnitt (21) eine Bodenplatte (22) enthält, die vertikal sandwichartig angeordnet wird, während sie in engem Kontakt mit der Mutter (10) und der Wärmesenke (40) gehalten wird, und mindestens eine umgebende Wand (23), die von der Bodenplatte (22) ausgehend nach oben steht, um eine oder mehrere Seitenflächen der Mutter (10) zumindest partiell zu umgeben.

2. Eine Anschlussleiste nach Anspruch 1, wobei eine oder mehrere Positionierungsrippen (25), die sich in eine vertikale Richtung erstrecken und mit der/n Seitenfläche/n der Mutter (10) in Kontakt geraten, an der Innenfläche der umgebenden Wand (23) bereitgestellt werden.

3. Eine Anschlussleiste nach Anspruch 2, wobei eine oder mehrere Positionierungsrippen (25) derart gebildet werden, dass sie die umgebende Wand (23) im Wesentlichen über die ganze Höhe verstärken.

4. Eine Anschlussleiste nach irgendeinem der vorhergehenden Ansprüche, wobei die innere Umfangsform der umgebenden Wand (23) im Wesentlichen mit der äußeren Umfangsform der Mutter (10) übereinstimmt.

5. Eine Anschlussleiste nach irgendeinem der vorhergehenden Ansprüche, wobei:
die Wärmesenke (40) eine Aufnahmevertiefung (43) enthält, in die ein Vorsprung (26) zumindest partiell einpassbar ist, der an der unteren Fläche der isolierenden Platte (20) bereitgestellt wird; und wobei
das zweite Positionierungsmittel (26; 43) gebildet wird, indem zumindest ein Teil des Vorsprungs (26) der isolierenden Platte (20) in die Aufnahmevertiefung (43) der Wärmesenke (40) eingepasst wird.

6. Eine Anschlussleiste nach Anspruch 5, wobei der Vorsprung (26)
der isolierenden Platte (20) gebildet wird, indem die isolierende Platte (20) mit mindestens einer Bolzenaustrittsvertiefung (26) gebildet wird, die im Wesentlichen mit einem in der Mutter (10) bereitgestellten Bolzenspannloch (11) koaxial ist, von einer Oberseite ausgehend nach unten versenkt ist und ausgehend von der isolierenden Platte (20) nach unten vorsteht.

7. Eine Anschlussleiste nach irgendeinem der vorhergehenden Ansprüche, wobei:
eine Vielzahl von Muttern (10) zumindest partiell in einem Mutter-Aufnahmeabschnitt (21) aufgenommen werden können; und wobei
mindestens eine Trennwand (24) zwischen den Muttern (10) bereitgestellt wird, sodass die Muttern (10) einzeln aufgenommen werden können.

8. Eine Anschlussleiste nach Anspruch 7, wobei die Trennwand (24) so festgesetzt wird, dass sie höher liegt als die auf den Muttern (10) liegenden Leiter.

9. Eine Anschlussleiste nach Anspruch 7 oder 8, wobei eine Höhe der Trennwand (24) so festgelegt wird, dass sie mehr als etwa 1,5 Mal größer ist als die Höhe der äußeren umgebenden Wände (23A), die von der Bodenplatte (22) des Mutter-Aufnahmeabschnitts (21) ausgehend nach oben ragen.

10. Eine Anschlussleiste nach irgendeinem der vorhergehenden Ansprüche, wobei die isolierende Platte (20) eine Vielzahl an Mutter-Aufnahmeabschnitte (21) enthält, die in der Lage sind zumindest teilweise eine Vielzahl an Muttern (10) aufzunehmen, und wobei eine einheitliche Bodenplatte (22), die allen Mutter-Aufnahmeabschnitten (21) gemeinsam ist, bereitgestellt wird, wobei sowohl die obere als auch die untere Fläche (22A, 22B) der Bodenplatte (22) vorzugsweise dazu ausgebildet werden flach zu sein.

11. Ein Verfahren zur Herstellung einer Anschlussleiste, die mindestens eine Mutter (10) umfasst, auf der von Vorrichtungen ausgehende Leiter zu platzieren sind, mindestens eine Wärmesenke (40), die unterhalb der unteren Fläche der Mutter (10) angeordnet wird, die der oberen Fläche davon, auf der die Leiter anzuordnen sind, gegenüberliegt, mindestens eine isolierende Platte (20), die vertikal sandwichartig angeordnet wird, während sie in engem Kontakt mit der Mutter (10) und der Wärmesenke (40) gehalten wird, ein Harzformteil (60), durch das die Mutter (10), die isolierende Platte (20) und die Wärmesenke (40) in einstückiger Weise ausgebildet sind, wobei das Verfahren die folgenden Schritte umfasst:
positionieren, relativ zueinander, der Mutter (10) und der isolierende Platte (20);
stützen der Mutter (10) durch ein erstes Gießformteil (71), das zur Öffnung des Gießformteils nach oben hin bewegt wird;
stützen der Wärmesenke (40) durch ein zweites Gießformteil (72), das zur Öffnung des Gießformteils nach unten hin bewegt wird, wobei die Mutter (10) relativ zur isolierenden Platte (20) positioniert wird und wobei die isolierende Platte (20) relativ zur Wärmesenke (40) positioniert wird; und
formen (*molding*) eines Harzformteils (60), durch das die Mutter (10), die isolierende Platte (20) und die Wärmesenke (40) einstückig ausgebildet und vertikal sandwichartig angeordnet werden,
durch Folgendes gekennzeichnet:
positionieren, relativ zueinander, der isolierenden Platte (20) und der Wärmesenke (40);
bereitstellen der isolierenden Platte (20) mit mindestens einem Mutter-Aufnahmeabschnitt (21), der der in der Lage ist, die Mutter (10) zumindest partiell aufzunehmen; und
aufnehmen, zumindest partiell, der Mutter (10) im Mutter-Aufnahmeabschnitt (21),
wobei der Mutter-Aufnahmeabschnitt (21) eine Bodenplatte (22) enthält, die vertikal sandwichartig angeordnet wird, während sie in engem Kontakt mit der Mutter (10) und der Wärmesenke (40) gehalten wird, und mindestens eine umgebende Wand (23), die von der Bodenplatte (22) ausgehend nach oben steht, um eine oder mehrere Seitenflächen der Mutter (10) zumindest partiell zu umgeben.

12. Ein Verfahren nach Anspruch 11, wobei die isolierende Platte (20) mindestens eine Bolzenaustrittsvertiefung (26) beinhaltet, die im Wesentlichen mit einem in der Mutter (10) bereitgestellten Bolzenspannloch (11) koaxial ist, und gebildet wird, indem eine Bodenplatte (22) eines Mutter-Aufnahmeabschnitts (21) der isolierenden Platte (20) vertieft bzw. abgesetzt wird, und
wobei das Positionieren der isolierenden Platte (20) und der Wärmesenke (40), relativ zueinander, beinhaltet, die Bolzenaustrittsvertiefung (26) zumindest partiell in die Aufnahmevertiefung (43) der Wärmesenke (40) einzupassen.

## Revendications

1. Un bloc de connexion, dans lequel des conducteurs s'étendant à partir de dispositifs, sont à placer l'un au-dessus de l'autre et à fixer au moyen d'un boulon, comprenant:
au moins un écrou (10) sur lequel les conducteurs sont à placer ;
au moins un dissipateur de chaleur (40) disposé au-dessous de la surface inférieure de l'écrou (10) opposée à la surface supérieure de celui-ci, sur laquelle sont placés les conducteurs ;
au moins une plaque isolante (20) verticalement prise en sandwich tout en étant maintenue en contact étroit avec l'écrou (10) et le dissipateur de chaleur (40);
une partie moulée en résine (60) par laquelle l'écrou (10), la plaque isolante (20) et le dissipateur de chaleur (40) sont intégralement formés ; et
au moins un premier moyen de positionnement pour positionner l'écrou (10) et la plaque isolante (20) l'un par rapport à l'autre au moment du moulage intégral ;
sachant qu'on fourni en outre au moins un deuxième moyen de positionnement (26 ; 43) pour positionner la plaque isolante (20) et le dissipateur de chaleur (40) l'un par rapport à l'autre au moment du moulage intégral ;
**caractérisé en ce que**
la plaque isolante (20) inclut au moins une portion de logement d'écrou (21) qui est en mesure de loger l'écrou (10) au moins partiellement ; et que
le premier moyen de positionnement est formé en logeant au moins partiellement l'écrou (10) dans la portion de logement d'écrou (21),
sachant que la portion de logement d'écrou (21) inclut une plaque de fond (22), qui est prise verticalement en sandwich tout en étant maintenue en contact étroit avec l'écrou (10) et le dissipateur de chaleur (40), et au moins une paroi environnante (23) debout vers le haut à partir de la plaque de fond (22) pour entourer au moins partiellement une ou plusieurs faces de l'écrou (10).

2. Un bloc de connexion d'après la revendication 1, sachant qu'une ou plusieurs nervures de positionnement (25), qui s'étendent dans une direction verticale et peuvent entrer en contact avec la/les surface(s) de l'écrou (10), sont fournies sur la surface intérieure de la paroi environnante (23).

3. Un bloc de connexion d'après la revendication 2, sachant qu'une ou plusieurs nervures de positionnement (25) sont formées de manière à renforcer la paroi environnante (23) essentiellement sur toute la hauteur.

4. Un bloc de connexion d'après une quelconque des revendications précédentes, sachant que la forme périphérique intérieure de la paroi environnante (23) est essentiellement conforme à la forme périphérique extérieure de l'écrou (10).

5. Un bloc de connexion d'après une quelconque des revendications précédentes, sachant que :
le dissipateur de chaleur (40) inclut un évidement de logement (43) dans lequel une saillie (26), fournie sur la surface inférieure de la plaque isolante (20), peut être ajustée au moins en partie ; et que
le deuxième moyen de positionnement (26 ; 43) est formé en ajustant au moins partiellement la saillie (26) de la plaque isolante (20) dans l'évidement de logement (43) du dissipateur de chaleur (40).

6. Un bloc de connexion d'après la revendication 5, sachant que la saillie (26) de la plaque isolante (20) est constituée en formant au moins un évidemment d'échappement de boulon (26), qui est essentiellement coaxial avec le trou de serrage de boulon (11) fourni dans l'écrou (10), renfoncé vers le bas à partir d'une face supérieure et saillant vers le bas à partir de la plaque isolante (20).

7. Un bloc de connexion d'après une quelconque des revendications précédentes, sachant que :
une pluralité d'écrous (10) peut être logée au moins partiellement dans une portion de logement d'écrou (21) ; et que
au moins une cloison de séparation (24) est fournie entre les écrous (10) de sorte que les écrous (10) puissent être logés de façon individuelle.

8. Un bloc de connexion d'après la revendication 7, sachant que la cloison de séparation (24) est définie de manière à être située plus haut que les conducteurs placés sur les écrous (10).

9. Un bloc de connexion d'après la revendication 7 ou 8, sachant qu'une hauteur de la cloison de séparation (24) est définie de manière à être à peu près 1,5 fois plus grande que la hauteur de parois environnantes extérieures (23A) debout vers le haut à partir de la plaque de fond (22) de la portion de logement d'écrou (21).

10. Un bloc de connexion d'après une quelconque des revendications précédentes, sachant que la plaque isolante (20) inclut une pluralité de portions de logement d'écrou (21) en mesure de loger au moins partiellement une pluralité d'écrous (10), et qu'on fournit une plaque de fond (22) unitaire commune à toutes les portions de logement d'écrou (21), sachant que les deux surfaces supérieure et inférieure (22A, 22B) de la plaque de fond (22) sont préférablement formées de manière à être plates.

11. Un procédé de fabrication d'un bloc de connexion comprenant au moins un écrou (10) sur lequel des conducteurs s'étendant à partir de dispositifs sont à placer, au moins un dissipateur de chaleur (40) disposé au-dessous de la surface inférieure de l'écrou (10) opposée à la surface supérieure de celui-ci, sur laquelle sont à placer les conducteurs, au moins un plaque isolante (20) verticalement prise en sandwich tout en étant maintenue en contact étroit avec l'écrou (10) et le dissipateur de chaleur (40), et une partie moulée en résine (60) par laquelle l'écrou (10), la plaque isolante (20) et le dissipateur de chaleur (40) sont intégralement formés, le procédé comprenant les étapes suivantes:
positionner relativement l'écrou (10) et la plaque isolante (20) l'un par rapport à l'autre ;
soutenir l'écrou (10) par un premier moule (71) qui est déplacé vers le haut pour l'ouverture du moule ;
soutenir le dissipateur de chaleur (40) par un deuxième moule (72) qui est déplacé vers le bas pour l'ouverture du moule, l'écrou (10) étant positionné par rapport à la plaque isolante (20) et la plaque isolante (20) étant positionnée par rapport au dissipateur de chaleur (40) ; et
mouler une partie moulée en résine (60) par laquelle l'écrou (10), la plaque isolante (20) et le dissipateur de chaleur (40) sont intégralement formés et verticalement pris en sandwich
**caractérisé par** le fait de
positionner la plaque isolante (20) et le dissipateur de chaleur (40) l'un par rapport à l'autre ;
fournir la plaque isolante (20) avec au moins une portion de logement d'écrou (21) qui est en mesure de loger l'écrou (10) au moins partiellement ; et
loger au moins partiellement l'écrou (10) dans la portion de logement d'écrou (21),
sachant que la portion de logement d'écrou (21) inclut une plaque de fond (22), qui est prise verticalement en sandwich tout en étant maintenue en contact étroit avec l'écrou (10) et le dissipateur de chaleur (40), et au moins une paroi environnante (23) debout vers le haut à partir de la plaque de fond (22) pour entourer au moins partiellement une ou plusieurs faces de l'écrou (10).

12. Un procédé d'après la revendication 11, sachant que la plaque isolante (20) inclut un évidement d'échappement de boulon (26), qui est coaxial avec le trou de serrage de boulon (11) fourni dans l'écrou (10) et qui est formé en évidant une plaque de fond (22) d'une portion de logement d'écrou (21) de la plaque isolante (20), et
sachant que le positionnement relatif de la plaque isolante (20) par rapport au dissipateur de chaleur (40) inclut le fait d'ajuster l'évidement d'échappement de boulon (26) dans un évidement de logement (43) du dissipateur de chaleur (40).
